# EUROPÄISCHE PATENTSCHRIFT

(11) **EP 3 750 690 B1**
(45) Veröffentlichungstag und Bekanntmachung des Hinweises auf die Patenterteilung: **11.09.2024**
(21) Anmeldenummer: 20182183.2
(22) Anmeldetag: 05.11.2015
(51) Int. Cl.: B29C 64/182, B29C 64/393, B29C 64/153, B33Y 50/02

(54) **PRODUKTIONSANLAGE ZUR SIMULTANEN, GENERATIVEN HERSTELLUNG VON MEHREREN BAUTEILEN**
PRODUCTION SYSTEM FOR THE SIMULTANEOUS, ADDITIVE MANUFACTURING OF SEVERAL COMPONENTS
INSTALLATION DE PRODUCTION POUR LA FABRICATION ADDITIVE ET SIMULTANÉE DE PLUSIEURS COMPOSANTS

(30) Priorität: 13.11.2014 DE 102014016718
(43) Veröffentlichungstag der Anmeldung: 16.12.2020
(62) Teilanmeldung aus: 15794509.8
(73) Patentinhaber: Concept Laser GmbH, 96215 Lichtenfels (DE)
(72) Erfinder: Herzog, Frank Carsten, 96215 Lichtenfels (DE)
(74) Vertreter: Hafner & Kohl PartmbB

(56) Entgegenhaltungen:
- WO-A1-2017/167399
- WO-A2-2010/112213
- WO-A2-2011/131733
- DE-A1- 102008 060 046
- DE-A1- 102012 003 160
- DE-A1- 19 939 616
- DE-B4- 19 939 616
- JP-A- 2005 263 112

## Beschreibung

Die Erfindung betrifft eine Produktionsanlage, mit der simultan und auf generative Weise mehrere Bauteile mittels eines selektiven Lasersinter- oder eines Laserschmelzverfahrens hergestellt werden können. Die Herstellung läuft in einem Produktionsanlagebereich ab, in dem wenigstens zwei Bauvorrichtungen in Form von Lasersinter- oder Laserschmelzvorrichtungen vorgesehen werden. Derartige Vorrichtungen werden in der Regel als SLM- oder SLS-Vorrichtungen bezeichnet und umfassen in der Regel einen aus einer Prozesskammer der Vorrichtung entnehmbaren Baucontainer.

In dem Baucontainer ist eine höhenverfahrbare Plattform angeordnet, auf die mittels eines Beschichters ein verschmelz- oder sinterfähiges Baumaterial aufgetragen wird. Schichtweise wird durch einen über einen Scanner zugeführten Laserstrahl die Baumaterialschicht gesintert oder verschmolzen und dabei verfestigt. Auf diese teilverfestigte Schicht wird eine nächste Schicht aufgetragen und der Lasersinter- oder Laserschmelzvorgang so lange wiederholt, bis das dreidimensionale Bauteil fertiggestellt ist.

Nach Fertigstellung erfolgt eine Entnahme des fertigen oder zumindest teilfertigen Bauteils aus dem Baucontainer in einer Entnahmestation. Eine Entnahmestation dient dazu, das nicht verfestigte Baumaterial aus dem Baucontainer zu entnehmen und vorschriftsmäßig abzuführen und dgl.. Dann kann das Bauteil in eine Nachbearbeitungsstation zur thermischen oder oberflächlich mechanischen Nachbearbeitung verbracht werden. Sobald das Werkstück fertig ist, kommt es in einen Lagebereich zur Lagerung der Bauteile.

In der Regel arbeiten all die genannten Vorrichtungen für sich gesehen autark, d. h. ein Bauteil wird in einer Bauvorrichtung fertiggestellt, durch eine Bedienungsperson wird dann der Behälter entnommen. Das Bauteil wird manuell oder teilautomatisiert in einer Entnahmestation entpackt, das entpackte Bauteil wird dann manuell von einer Bedienungsperson in eine Nachbearbeitungsstation verbracht, dort installiert, der Nachbearbeitungsprozess durchgeführt und dann wird das Bauteil durch eine Bedienungsperson in ein Lager gebracht, wo es dann zum Versand fertiggemacht wird.

Jede der genannten Vorrichtungen weist in der Regel eine gesonderte elektronische Steuerung auf, ein in einem Produktionsbearbeitungsbereich tätiger Mitarbeiter ist gezwungen, sich jeweils nach Abschnitt eines Fertigungs- oder Entnahmeschrittes zu erkundigen, welche der weiteren Vorrichtungen in dem Produktionsbearbeitungsbereich frei ist für weitere Bearbeitungsschritte, welche Vorrichtung ausreichend Baumaterial umfasst, um einen neuen Bauvorgang zu starten, welcher Lagerbereich geeignet ist, um ein Bauteil aufzunehmen und dgl. DE 102008060046 A1 und WO 2010/112213 A2 offenbaren Produktionsanlagen zur generativen Herstellung von Bauteilen.

Es ist Aufgabe der Erfindung, eine Produktionsanlage mit den Merkmalen des Oberbegriffes des Anspruches 1 so auszubilden, dass in ihr mehr oder weniger voll automatisch die einzelnen Herstellungs-, Entpackungs-, Bestückungs-, Nachbearbeitungs- und Transportschritte ablaufen können, dass die in der Produktionsanlage vorzusehenden Einzelvorrichtungen vereinfacht ausgebildet werden können und der gesamte Produktionsablauf mit den genannten Einzelschritten schneller durchführbar ist. Diese Aufgabe wird durch die Kombination der Merkmale des Anspruches 1 gelöst. Vorteilhafte Weiterbildungen ergeben sich aus den Unteransprüchen.

Zunächst ist in der Produktionsanlage eine Produktionsanlagensteuerungseinrichtung vorgesehen, die mit den Bauvorrichtungen, der wenigstens einen Entnahmestation, der wenigstens einen Nachbearbeitungsstation und dgl. zusammenwirkt und die zur Steuerung der Vorrichtung sowie zur Abfrage des Betriebsstatus und der zeitlichen Verfügbarkeit der Vorrichtungen sowie zur Abfrage der in den Vorrichtungen verfügbaren Baumaterialmengen und derart ausgebildet ist.

Dies bedeutet zunächst, dass die Anlagensteuereinrichtung geeignet ist, mit den Bauvorrichtungen zusammenzuwirken. Alle Bauvorrichtungen können von dieser Anlagensteuereinrichtung quasi wie von einer Produktionswarte aus von nur einer Bedienungsperson beaufsichtigt werden. Die Bauvorrichtungen selbst, d. h. die Lasersinter oder Laserschmelzanlagen, müssen nicht mehr mit gesonderten Eingabevorrichtungen oder Displays versehen werden, sie können damit einfacher und kostengünstiger hergestellt werden.

Darüber hinaus entfällt eine Kontrolle durch eine Bedienungsperson, wie viel Baumaterial in einer Anlage noch vorhanden ist. Eine Anlage, die für den nächsten Bauvorgang nicht ausreichend Baumaterial beinhaltet, kann z. B. über eine automatische Nachfülleinrichtung befüllt werden, was auch durch die Produktionsanlagensteuereinrichtung vorgenommen werden kann. Die Bedienungsperson, die an der Produktionsanlagensteuereinrichtung arbeitet, übersieht mit einem Blick auf einem Display, welche der Bauvorrichtung zur Verfügung steht, wieviel Baumaterial sie beinhaltet, um welches Baumaterial es sich handelt. Die Bedienungsperson bekommt ein Feedback von der Vorrichtung, ob das Baumaterial für den nächsten Bauvorgang, der ebenfalls an der "Steuerwarte" eingegeben und gestartet werden kann, für den nächsten Bauvorgang ausreichend ist.

Ein weiteres wesentliches Merkmal der Anlage besteht darin, die Baucontainer, die aus den Bauvorrichtungen entnehmbar sind, durch selbst angetriebene und durch die Produktionsanlagensteuervorrichtung lenkbare und steuerbare Transportmittel automatisch aufzunehmen, zu einer Vorrichtung oder Station der Anlage zu transportieren und dort z. B. in eine Prozesskammer einzusetzen, automatisch zu verriegeln oder nach Abschluss eines Bauprozesses auch wieder zu entriegeln, aufzunehmen und zu einer weiteren Station, z. B. einer Zwischenlagerstation oder Entnahmestation zu verbringen und in diese einzusetzen. Die Transportmittel im Rahmen der Erfindung sind entweder selbst angetriebene Transportwagen die am Boden fahren und beliebig steuerbar sind oder sind als Transport-Fluggeräte ausgebildet, wobei die Fluggeräte z. B. Quatrokopter oder Optokopter sein können, d. h. hubschrauberähnlich ausgebildete Geräte, die heute auch als "Drohnen" bezeichnet werden und geeignet sind, entsprechende Lasten aufzunehmen.

Derartige Fluggeräte haben sich heute in den breitesten Einsatzbereichen bewährt und sind in der Lage, auch relativ hohe Lasten aufzunehmen und sehr präzise an einem Bestimmungsort zu verbringen und dort abzusetzen.

Mit anderen Worten wird nicht nur eine Überwachung der Bauvorrichtungen vorgenommen, sondern auch deren Beschickung mit Baucontainern, Bauteilen, Bauplatten oder Baumaterial die Entnahme der Baucontainer nach einem Bauvorgang, das Verbringen der Baucontainer zu einer Entnahmestation oder einem Lagerplatz und dgl.. Auch all dies ist zentral durch die Produktionswarte steuerbar.

Nur eine Bedienungsperson kann z. B. festlegen, welcher Baucontainer zu welcher Bauvorrichtung verbracht wird, welches Material in dem Baucontainer verbaut wird, zu welcher Entnahmestation der Baucontainer mit dem fertiggestellten Bauteil gefahren oder geflogen wird, ob dieses Bauteil zusammen mit dem Baumaterial in einer Inertgasatmophäre unter Ausschluss von Explosionsgefahr entpackt werden kann und dgl.. All diese Produktionsschritte können zentral über die Produktionsanlagensteuereinrichtung vorgenommen werden. Dazu weist die Produktionsanlagensteuereinrichtung eine Eingabevorrichtung und wenigstens ein Display auf. Damit können Steuerdaten für die Gesamtheit der Produktionsanlage, d.h. für die Bauvorrichtungen, die Entnahmestation, Nachbearbeitungsstationen und dgl. eingegeben werden, beginnend vom Baumaterial über Baudaten bis hin zu Kundendaten und dem Versandzielort, der ausschlaggebend sein kann für den Lagerort, zu dem das fertige Bauteil verbracht wird.

Besonders vorteilhaft ist es, wenn jedes selbstangetriebene Transportmittel eine durch die SLM- oder SLS-Vorrichtung, die Entnahmestation, die Nachbearbeitungsstation und die Produktionsanlagensteuervorrichtung lesbare elektronische Codierung aufweist. Auf diese Weise wird eine Kontrolle ermöglicht, die einer Bedienungsperson, auf übersichtliche Weise Kenntnis verschafft, welche Komponente der gesamten Produktionsanlage sich wo, zu welchem Zeitpunkt befindet. All dies kann auf einem Display dargestellt und in einem Speicher protokolliert werden, um den gesamten Produktionsablauf auf transparente Weise später nachvollziehen zu können, was für eine Qualitätssicherung der oftmals teuren und empfindlichen Bauteile wesentlich oder zumindest vorteilhaft ist.

Die Produktionsanlagensteuervorrichtung kann dabei mit einer Empfangseinrichtung versehen sein, durch welche von den Baucontainern ausgesandte werkstückspezifische Daten lesbar sind. Diese Daten können z. B. beim Bauvorgang in einen Speicher des Baucontainers eingelesen werden und sind dann von dort jeweils abrufbar.

Was die selbst angetriebenen und ohne Schienen steuerbaren Transportwagen anbelangt, so sind derartige Transportwagen Stand der Technik, sie können z. B. über ein Hallen-GPS-System gesteuert werden, wobei auch diese Steuerung über die Produktionsanlagensteuervorrichtung erfolgt. Gleiches gilt für die Transport-Fluggeräte.

Die gesamte Produktionsanlage umfasst eine Mehrzahl von derartigen selbst angetriebenen Transportmittel. Wenigstens ein Teil dieser Transportmittel ist mit Aufnahme- und Lagervorrichtungen für entpackte Bauteile versehen, außerdem können Roboterarme und dgl. für das Handling dieser Bauteile oder von in Containern einzusetzende Bauplatten auf oder an den Transportmitteln vorgesehen werden, um die Bauteile oder Bauplatten aus den Baucontainern zu entnehmen bzw. in diese einzusetzen, zu drehen, zu wenden und z. B. in eine Nachbearbeitungsstation auf einem entsprechenden Justiersockel aufzusetzen.

Die Transportmittel können auch Antriebe für die Höhenverstellung von Trägerplatten haben, die in den auf oder an ihnen angeordneten Baucontainern höhenverlagerbar angeordnet sind, um z. B. im Bereich einer Entnahmestation ein fertiges Bauteil sowie nicht verfestigtes Baumaterial aus einem Baucontainer herauszuheben und weiter zu fördern.

In Weiterbildung der Erfindung wird nicht nur die Verfügbarkeit der Anlagenkomponenten für weitere Produktionsschritte abgefragt oder der Füllstand von Dosier- und Vorratsbehältern von Baumaterial, die Produktionsanlagensteuervorrichtung ist auch in der Lage, z. B. Bauplattenhandlings- und Justiereinrichtungen zu steuern, durch welche Bauplatten vollautomatisch auf den höhenverstellbaren Trägern von Baucontainern platzierbar und dort befestigbar sind und in eine Solllage einjustiert werden können. Die Justierdaten dieser Vorrichtungen können ebenfalls in einem Speicher der Produktionsanlagensteuereinrichtung abgespeichert werden. Es liegt auch im Rahmen der Erfindung, dass die Produktionsanlagensteuervorrichtung einen zeitlichen Produktionsplan berücksichtigt, durch welchen z. B. eine termingerechte Fertigstellung und/oder Auslieferung eines bestellten Bauteils vorgegeben wird.

Die Erfindung ist anhand eines vorteilhaften Ausführungsbeispiels in den Zeichnungsfiguren näher erläutert. Diese zeigen:

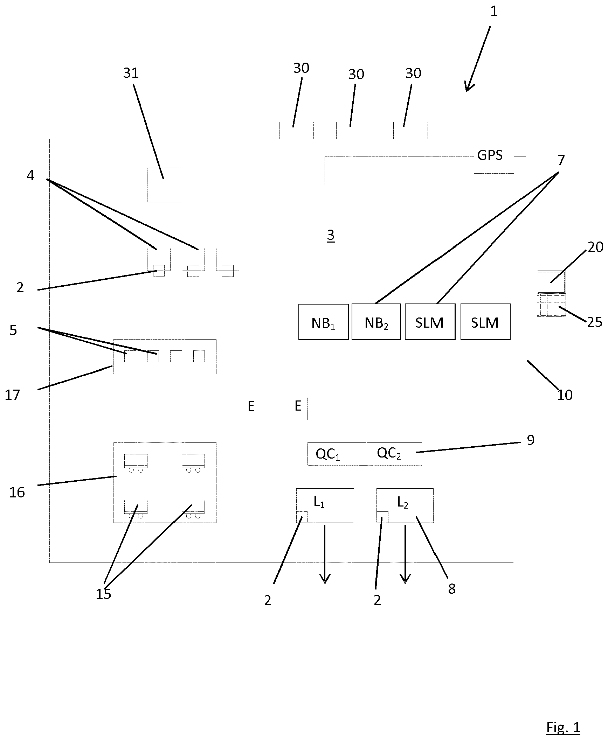

- Fig. 1: eine schematische, stark vereinfachte Darstellung eines Produktionsbearbeitungsbereiches mit einer Mehrzahl von unterschiedlichen Vorrichtungen;
- Fig. 2: eine schematische Darstellung eines durch die Produktionsanlagensteuervorrichtung lenkbaren Transportwagen mit aufgesetztem Baucontainer;
- Fig. 3: eine schematische Darstellung durch die Produktionsanlagensteuervorrichtung lenkbaren Transportwagen mit aufgesetztem Bauteil auf einer Spannvorrichtung sowie mit einem auf dem Transportwagen angeordneten fernsteuerbaren Roboterarm.

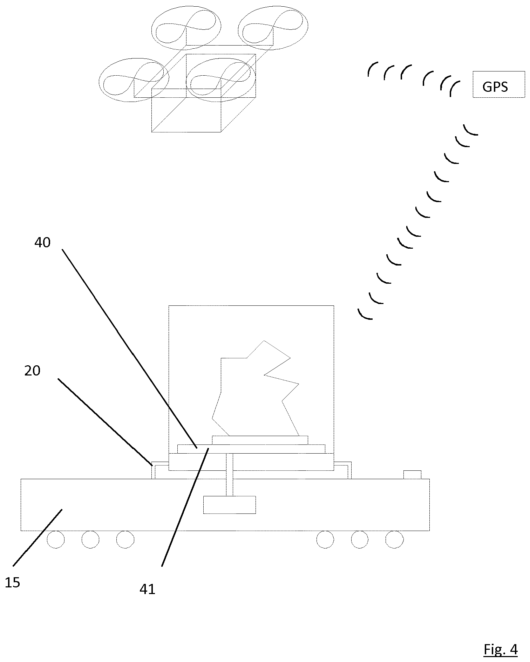

- Fig. 4: eine schematische Darstellung eines Transportwagens und eines Transportfluggerätes mit angekoppeltem Baucontainer.

Zunächst wird auf Zeichnungsfigur 1 Bezug genommen. Die Produktionsanlage 1 ist zur simultanen und generativen Herstellung von Bauteilen 2 vorgesehen und weist einen Produktionsbearbeitungsbereich 3, in dem wenigstens zwei SLS- und/oder SLM-Vorrichtungen 4 vorgesehen sind, die jeweils einen aus einer Prozesskammer der Vorrichtungen 4 entnehmbaren Baucontainer 5 aufweisen. Darüber hinaus ist in dem Produktionsbearbeitungsbereich 3 wenigstens eine Entnahmestation 6 vorgesehen, in dem aus einem Baucontainer 5 ein fertig gestelltes Bauteil 2 entnommen werden kann. Ferner ist in dem Produktionsanlagenbereich 3 wenigstens eine Nachbearbeitungsstation 7 zur thermischen und/oder oberflächlich mechanischen Nachbehandlung fertig gestellter entnommener Bauteile vorgesehen sowie ein Lagerbereich 8, in dem die Bauteile 2 zur Auslieferung verbracht und zwischengelagert werden können.

Alle Anlagenkomponenten des Produktionsanlagenbereiches 3 sind an eine Produktionsanlagensteuervorrichtung 10 angeschlossen, die zur Steuerung der jeweiligen Vorrichtungen 4, 6, 7 sowie zur Abfrage des jeweiligen Betriebsstatus und der zeitlichen Verfügbarkeit der Vorrichtungen und zur Abfrage der in den Vorrichtungen verfügbaren oder vorhandenen Baumaterialmengen und -art ausgebildet ist. Für die SLS- oder SLM-Vorrichtungen 4 bedeutet dies, dass abgefragt wird, ob ausreichend Baumaterial zur Verfügung steht, um den nächsten Baujob durchzuführen. Für die Entnahmestationen 6 bedeutet dies hingegen, dass abgefragt wird, ob noch ausreichend Platz für abzusaugendes Pulver in Pulverbehältern ist, damit ein Entnahmevorgang vorschriftsmäßig und ohne Kontamination eines Umgebungsbereiches mit Baumaterial durchgeführt werden kann.

Auch wenigstens eine Qualitätskontrolleinrichtung 9 kann an die Produktionsanlagensteuervorrichtung 10 angeschlossen werden, derartige Kontrollvorrichtungen können z.B. darin bestehen, dass elektronisch die äußere Form eines Bauteils abgescannt wird, deren Dichte bestimmt wird, deren Gewicht gemessen wird und dergleichen, wobei die Qualität der Bauteile auf unterschiedlichste Weise eingeschätzt werden kann.

Die Baucontainer 5 werden im Produktionsanlagenbereich 3 durch selbst angetriebene und durch die Produktionsanlagensteuervorrichtung 10 lenkbare Transportmittel 15 automatisch aufgenommen, zu einer Vorrichtung 4, 6, 7, 8, 9 transportiert und z.B. dort in eine Anlagenkomponente, wie z.B. die Prozesskammer, eingesetzt und automatisch verriegelt.

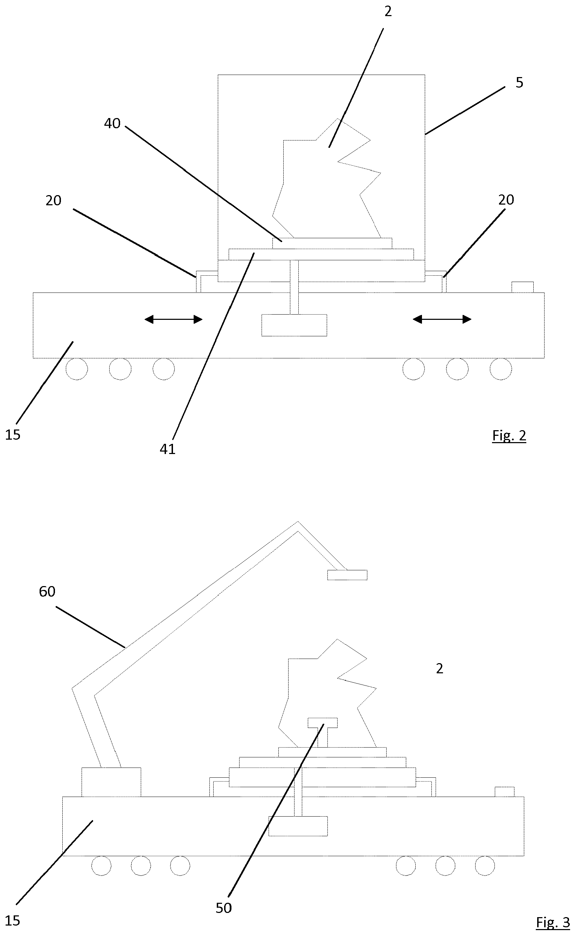

Nach Abschluss eines generativen Bauprozesses in einer SLS- oder SLM-Vorrichtung 4 werden die Baucontainer 5 durch einen selbst fahrendes Transportmittel 15 unter automatischer Entriegelung automatisch aufgenommen und programmgesteuert zu einer Zwischenlagerstation oder Entnahmestation 6 verfahren und dort in diese eingesetzt. Die Baucontainer 5 werden über wenigstens eine an ihnen angeordnete Kopplungsvorrichtung 20 (siehe Fig. 2) auf dem Transportmittel 15 befestigt und können z.B. durch Höhenverlagerung mit Verriegelungselementen einer SLM- oder SLS-Vorrichtung 4 in Eingriff gebracht werden, wobei die Kopplungsvorrichtung 20 zwischen Transportmittel 15 und Baucontainer 5 programmgesteuert gelöst wird.

Die Produktionsanlagensteuervorrichtung 10 umfasst wenigstens eine Eingabevorrichtung 25 und ein Display 26, sie ist damit wie eine Steuerwarte für den Produktionsanlagenbereich 3 ausgebildet.

In Weiterbildung der Erfindung weist jedes selbst angetriebene Transportmittel 15 eine durch die SLM- oder SLS-Vorrichtungen 4, die Entnahmestation 6, die Nachbearbeitungsstation 7 oder die Produktionsanlagensteuervorrichtung 10 lesbare elektronische Codierung auf, wobei die Produktionsanlagensteuervorrichtung 10 mit einer Empfangseinrichtung versehen ist, durch welche von den Baucontainern 5 ausgesandte werkstück-spezifische Daten lesbar sind. Dies führt in vorteilhafter Weise dazu, dass über die Produktionsanlagensteuervorrichtung 10 zu jeder Zeit überprüfbar ist, auf welchem Transportmittel 15 welcher Baucontainer 5 und damit welches Bauteil 2 transportiert wird. Die Produktionsanlagensteuerung 10 ist damit in der Lage, die selbstangetriebenen Transportmittel 15 zum Transport der Baucontainer 5 abhängig von den Werkstückdaten zu steuern. Damit wird sichergestellt, dass ein Baucontainer 5 z.B. zur thermischen Nachbehandlung in eine Wärmebehandlungsvorrichtung überführt wird, dort ein entsprechender Wärmebehandlungsschritt durchgeführt wird und dann das so "getemperte" Bauteil 2 zu einer Zwischenlagerstation oder zu einem Lagerbereich 8 verbracht wird.

Die Anlage umfasst eine Mehrzahl von selbstangetriebenen Transportwagen 15, die in einem Transportwagenparkbereich 16 zum Abruf geparkt sein können. Es liegt im Rahmen der Erfindung, die dort geparkten Transportmittels 15 bereits mit aufgesattelten Baucontainern 5 vorzusehen, damit bei Bedarf ein Transportmittel 15 mit einem Baucontainer 5 schnell zu einer SLM- oder SLS-Vorrichtung 4 verbracht werden kann. Darüber hinaus ist es im Rahmen der Erfindung auch möglich, ein Baucontainerreservoir 17 vorzusehen, in dem eine Mehrzahl von gleichen oder unterschiedlichen Baucontainern 5 bevorratet sein kann.

Durch die Zentralsteuerung der Anlagenkomponenten durch die Produktionsanlagensteuervorrichtung 10 können die einzelnen Vorrichtungen, insbesondere die SLM- oder SLS-Vorrichtungen 4 vereinfacht, d.h. ohne gesonderte Eingabe- und Displayvorrichtungen ausgebildet werden, was deren Herstellungskosten deutlich reduziert.

Die Produktionsanlagensteuervorrichtung 10 kann eine Verfügbarkeitsüberprüfungseinrichtung für die in der Produktionsanlage 1 enthaltenen Vorrichtungen umfassen. Die selbstangetriebenen Transportmittel 15 sowie die von ihnen getragenen Baucontainer 5 werden abhängig von einer Verfügbarkeitsprüfung der in der Produktionsanlage 1 vorhandenen Vorrichtungen 4, 6, 7, 8, 9 gesteuert. Dabei werden durch die Produktionsanlagensteuervorrichtung 10 der Füllstand von Dosier- oder Vorratsbehältern von Baumaterial in den SLM- oder SLS-Vorrichtungen überwacht und zur Abgabe eines Nachfüllsteuersignals für mit den Vorrichtungen verbundenen Nachfülleinrichtungen ausgebildet. Die Nachfülleinrichtungen umfassen Vorratsbehälter 30 mit unterschiedlichen Baumaterialarten sowie eine Pulvertransportvorrichtung 31, die von den Vorratsbehältern 30 zu den SLS- oder SLM-Vorrichtungen 4 fährt und dort Baumaterial absetzt. In gleicher Weise ist es denkbar, einen Pulvertransport von den Entnahmestationen 6 zu einer Pulverentsorgungs- oder Reinigungs-/Siebanlage vorzusehen, die nicht im Einzelnen dargestellt ist.

Darüber hinaus kann die Produktionsanlagensteuervorrichtung 10 auch mit einer Bauplattenhandlings- und Justiereinrichtung verbunden, durch welche Bauplatten vollautomatisch auf höhenverstellbaren Trägern der Baucontainer 5 platzierbar und befestigbar und in eine Solllage einjustierbar sind. Das Handling der Bauplatten 40, von denen eine auf einem höhenverstellbaren Träger 41 eines Baucontainers 5 dargestellt ist, kann durch Roboterarme oder dergleichen erfolgen, die Produktionsanlage 1 kann einen Lagerbereich für unterschiedliche Bauplatten 40 umfassen, die von Transportmitteln 15 mit einem Roboterarm aufgenommen werden können und in Container eingesetzt und dort automatisch justiert werden können. Eine automatische Justierung kann entweder optisch oder mechanisch durch Sensoren durchgeführt werden. Die Daten unterschiedlicher Bauplatten sind ebenfalls in der Produktionsanlagensteuereinrichtung 10 abgespeichert.

Darüber hinaus ist zur Qualitätskontrolle eine Abspeicherung thermischer Daten betreffend den Schmelzprozess in einer jeden SLM- oder SLS-Anlage abspeicherbar und darstellbar.

Zusätzlich ist es denkbar, dass für den Fall explosionskritischer Baumaterialien die Produktionsanlagensteuereinrichtung 10 so ausgebildet und programmiert ist, dass sie eine ordnungsgemäße Inertisierung und/oder Flutung von Pulverabsaugeinrichtungen oder Entnahmestationen 6 umfasst.

In Zeichnungsfigur 3 ist ein Transportwagen 15a dargestellt, auf dem eine Zentriervorrichtung 50 angeordnet ist, auf der ein bereits entpacktes Bauteil 2 in definierter Solllage gehalten werden kann. Der Transportwagen 15a kann damit in einen Nachbearbeitungsbereich einfahren, um z.B. eine oberflächliche Nachbearbeitung des Bauteils 2 vorzunehmen. Ein Roboterarm 60 ist geeignet, ein Bauteil aus einem Baucontainer 5 zu entnehmen und auf die Zentriervorrichtung 50 aufzusetzen bzw. wieder von dieser zu lösen und dann z.B. in einem Lagerbereich 8 abzusetzen.

In Zeichnungsfigur 4 ist zusätzlich zu einem Transportwagen 15a rein schematisch ein Transportfluggerät 15b dargestellt, an dem ein Baucontainer 5 angekoppelt ist. Der Baucontainer 5 wird durch eine Kopplungsvorrichtung an der Unterseite des Transportfluggerätes 15b gehalten. Das Transportfluggerät 15b ist im vorliegenden Fall als Quatrokopter dargestellt und ebenfalls über das Hallen-GPS steuerbar ebenso wie die Transportwagen 15a.

### BEZUGSZEICHENLISTE

- 1: Produktionsanlage
- 2: Bauteil
- 3: Produktionsanlagenbereich
- 4: SLM/SLS-Vorrichtung
- 5: Baucontainer
- 6: Entnahmestation
- 7: Nachbearbeitungsstation
- 8: Lagerbereich
- 9: Qualitätskontrolleinrichtung
- 10: Produktionsanlagensteuervorrichtung

- 15: Transportmittel
- 15a: Transportwagen
- 15b: Transportfluggerät
- 16: Transportwagenparkbereich
- 17: Baucontainerreservoir

- 20: Kopplungsvorrichtung

- 25: Eingabevorrichtung
- 26: Display

- 30: Vorratsbehälter
- 31: Pulvertransportvorrichtung

- 40: Bauplatten
- 41: Träger

- 50: Zentriervorrichtung

- 60: Roboterarm

## Patentansprüche

1. Produktionsanlage (1) zur simultanen, generativen Herstellung von mehreren Bauteilen (2) mittels selektiver Laser-Sinterverfahren- oder Laser-Schmelzverfahren, wobei in wenigstens einem Produktionsbearbeitungsbereich (3) vorgesehen sind
- wenigstens zwei Bauvorrichtungen in Form von SLM- und/oder SLS-Vorrichtungen (4), die jeweils mindestens einen aus einer Prozesskammer der Vorrichtungen entnehmbaren Baucontainer (5) aufweisen,
- wenigstens eine Entnahmestation (6) zum Entpacken eines fertiggestellten Bauteils (2) aus einem der Baucontainer (5),
- wenigstens eine Nachbearbeitungsstation (7) zur thermischen und/oder oberflächlich mechanischen Nachbehandlung fertiggestellter entnommener Bauteile (2) und
- wenigstens ein Lagerbereich (8) zur Lagerung der Bauteile (2),
- selbstangetriebene und durch eine Produktionsanlagensteuervorrichtung (10) lenkbare und steuerbare Transportmittel (15), sowie
- eine Produktionsanlagensteuervorrichtung (10), an die die Bauvorrichtungen, die Entnahmestation (6) und die Nachbearbeitungsstationen (7) angeschlossen sind und die zur Steuerung der Vorrichtungen oder Stationen sowie zur Abfrage des Betriebsstatus und der zeitlichen Verfügbarkeit der Vorrichtungen oder Stationen, sowie zur Abfrage der in den Bauvorrichtungen verfügbaren Baumaterialmengen und -art ausgebildet ist,
- wobei entweder die Baucontainer (5) und/oder aus diesen herausgelöste fertiggestellte Bauteile (2) oder in die Baucontainer einzusetzende Bauplatten (40) durch die Produktionsanlagensteuervorrichtung (10) lenk- und steuerbaren Transportmittel (15) automatisch aufnehmbar, zu einer Vorrichtung oder Station transportierbar, dort entweder in eine Prozesskammer einsetzbar und automatisch verriegelbar sind oder in eine Nachbearbeitungsstation (7) einsetzbar sind, oder
- die Baucontainer (5) oder die Bauteile (2) nach Abschluss eines generativen Bauprozesses durch ein selbstangetriebenes Transportmittel (15) unter automatischer Entriegelung automatisch aufnehmbar und programmgesteuert zu einer Zwischenlagerstation oder Entnahmestation (6) verfahrbar sind und in diese einsetzbar sind,
wobei die Transportmittel (15) entweder als Transportwagen (15a) oder als Transport- Fluggeräte (15b) ausgebildet sind.

2. Produktionsanlage nach Anspruch 1, wobei die Baucontainer (5) oder Bauteile (2) oder Bauplatten (40) über wenigstens eine Kopplungsvorrichtung (20) auf oder an den Transportmitteln (15) befestigt sind und mit Verriegelungselementen einer SLM- oder SLS- Vorrichtung (4), einer Nachbehandlungsstation (7) oder eines höhenverfahrbaren Trägers (41 ) eines Baucontainers (5) in Eingriff bringbar sind sowie die Kopplungsvorrichtung (20) zwischen Transportmittel (15) und Baucontainer (5), Bauteil (2) oder Bauplatte (40) programmgesteuert lösbar ist.

3. Produktionsanlage nach Anspruch 1 oder 2, **dadurch gekennzeichnet, dass** die Produktionsanlagensteuervorrichtung (10) eine Eingabevorrichtung (25) und/oder ein Display (26) aufweist, wobei über die Eingabevorrichtung (25) Steuerdaten für die Gesamtheit der in der Produktionsanlage (1) vorhandenen Bauvorrichtungen, Entnahmestationen (6), Nachbearbeitungsstationen (7) eingebbar sind und wobei auf dem Display (26) sowohl produktionsanlagenspezifische Daten der gesamten Produktionsanlage (1 ) sowie ihrer Einzelkomponenten darstellbar sind.

4. Produktionsanlage nach einem der vorhergehenden Ansprüche, **dadurch gekennzeichnet, dass** jedes selbst angetriebene Transportmittel (15) eine durch die Bauvorrichtungen, die Entnahmestation (6), die Nachbearbeitungsstation (7) und/oder die Produktionsanlagensteuervorrichtung (10) lesbare elektronische Codierung aufweist.

5. Produktionsanlage nach einem der vorhergehenden Ansprüche, **dadurch gekennzeichnet, dass** die Produktionsanlagensteuervorrichtung (10) mit einer Empfangseinrichtung versehen ist, durch welche von den Baucontainern (5) ausgesandte werkstückspezifische Daten lesbar sind.

6. Produktionsanlage nach einem der vorhergehenden Ansprüche, **dadurch gekennzeichnet, dass** die Produktionsanlagensteuereinrichtung (10) die selbstangetriebenen Transportmittel (15) zum Transport der Baucontainer (5) abhängig von den Werkstückdaten steuert.

7. Produktionsanlage nach einem der vorhergehenden Ansprüche, **dadurch gekennzeichnet, dass** sie eine Mehrzahl von selbstangetriebenen Transportmitteln (15) umfasst, wobei wenigstens ein Teil dieser Transportmittel (15) mit Aufnahme- oder Lagervorrichtungen oder Kopplungseinrichtungen für entpackte Bauteile versehen ist.

8. Produktionsanlage nach einem der vorhergehenden Ansprüche, **dadurch gekennzeichnet, dass** die Bauvorrichtungen der Produktionsanlage (1) ohne gesonderte Eingabe- und Displayvorrichtungen ausgebildet sind.

9. Produktionsanlage nach einem der vorhergehenden Ansprüche, **dadurch gekennzeichnet, dass** die Produktionsanlagensteuervorrichtung (10) mit einer Verfügbarkeits- Überprüfungseinrichtung für die in der Produktionsanlage (1) enthaltenen Vorrichtungen versehen ist und die selbstangetriebenen Transportmittel (15) die an ihnen angekoppelten Baucontainer (5) oder Bauteile (2) abhängig von einer Verfügbarkeitsprüfung der in der Produktionsanlage (1) vorhandenen Vorrichtungen automatisch durch die Produktionsanlagensteuerungsvorrichtung (10) gesteuert werden.

10. Produktionsanlage nach einem der vorhergehenden Ansprüche, **dadurch gekennzeichnet, dass** die Produktionsanlagensteuerungsvorrichtung (10) den Füllstand von Dosier- und/oder Vorratsbehältern (30) von Baumaterial (2) in den Bauvorrichtungen überwacht und zur Abgabe eines Nachfüll-Steuersignals für die mit den Vorrichtungen verbundenen oder mit den Transportmitteln (15) zu diesen verfahrbaren Nachfülleinrichtungen ausgebildet ist.

11. Produktionsanlage nach einem der vorhergehenden Ansprüche, **dadurch gekennzeichnet, dass** die Produktionsanlagensteuervorrichtung (10) mit einer Bauplattenhandlings- und Justiereinrichtung verbunden ist, durch welche Bauplatten (40) vollautomatisch auf höhenverstellbaren Trägern (41) von Baucontainern (5) platzierbar und befestigbar sind und in eine Solllage einjustierbar sind.

12. Produktionsanlage nach einem der vorhergehenden Ansprüche, **dadurch gekennzeichnet, dass** die Justierdaten in der Produktionsanlagensteuervorrichtung (10) abgespeichert werden.

13. Produktionsanlage nach einem der vorhergehenden Ansprüche, **dadurch gekennzeichnet, dass** die Daten unterschiedlicher Bauplatten (40) Produktionsanlagensteuereinrichtung (10) abspeicherbar sind.

14. Produktionsanlage nach einem der vorhergehenden Ansprüche, **dadurch gekennzeichnet, dass** in der Produktionsanlagensteuereinrichtung (10) thermische Daten betreffend den Schmelzprozess in einer jeden SLM-Anlage abspeicherbar und darstellbar sind.

15. Produktionsanlage nach einem der vorhergehenden Ansprüche, **dadurch gekennzeichnet, dass** die Transportmittel (15) der Produktionsanlage (1) durch ein Hallen-GPS-System steuerbar sind.

16. Produktionsanlage nach einem der vorhergehenden Ansprüche, **dadurch gekennzeichnet, dass** in der Produktionsanlage integrierte oder verwendete Pulverabsaugeinrichtungen an die Produktionsanlagensteuereinrichtung angeschlossen sind und von dieser auf ordnungsgemäße Inertisierung und/oder Flutung überwacht werden, wobei die Pulverabsaugeinrichtungen von den Transportmitteln (15) von den zu den Bauvorrichtungen (4) bringbar und an diese zum Absaugvorgang ansetzbar sind.

## Claims

1. Production plant (1) for the simultaneous, generative production of several components (2) by means of selective laser sintering or laser melting processes, wherein at least one production processing area (3) are provided
- at least two construction devices in the form of SLM and/or SLS devices (4), each having at least one construction container (5) which can be removed from a process chamber of the devices,
- at least one unpacking station (6) for unpacking a finished component (2) from one of the construction containers (5),
- at least one post-processing station (7) for thermal and/or superficially mechanical post-treatment of completed removed components (2) and
- at least one storage area (8) for the storage of components (2),
- self-propelled means of transport (15) steerable and controllable by a production plant control device (10), and
- a production plant control device (10) to which the construction devices, the extraction station (6) and the post-processing stations (7) are connected and which is designed to control the devices or stations as well as to query the operating status and the time availability of the devices or stations, as well as to query the quantities and type of construction material available in the construction devices,
- wherein either the construction containers (5) and/or completed components (2) separated from them or construction boards (40) to be inserted into the construction containers by the production plant control device (10) steerable and controllable means of transport (15) can be automatically picked up, transported to a device or station, there either can be inserted into a process chamber and automatically locked or can be inserted into a post-processing station (7), or
- the construction containers (5) or the components (2) after completion of a generative construction process by a self-propelled means of transport (15) are automatically removable under automatic unlocking and movable programmatically to an intermediate storage station or removal station (6) and can be used in them, wherein the means of transport (15) are designed either as transport trolleys (15a) or as transport aircraft (15b).

2. Production plant according to claim 1, wherein the construction containers (5) or components (2) or construction plates (40) are fixed via at least one coupling device (20) on or to the means of transport (15) and can be engaged with locking elements of an SLM or SLS device (4), a post-treatment station (7) or a height-movable carrier (41 ) of a construction container (5) and the coupling device (20) between means of transport (15) and construction container (5), component (2) or construction plate (40) is programmatically detachable.

3. Production plant according to claim 1 or 2, **characterized in that** the production plant control device (10) has an input device (25) and / or a display (26), wherein control data for the entirety of the existing in the production plant (1) construction devices, withdrawal stations (6), post-processing stations (7) can be entered via the input device (25) and wherein on the display (26) both production plant-specific data of the entire production plant (1 ) and its individual components can be represented.

4. Production plant according to one of the preceding claims, **characterized in that** each self-propelled means of transport (15) has an electronic coding readable by the construction devices, the removal station (6), the post-processing station (7) and / or the production plant control device (10).

5. Production plant according to one of the preceding claims, **characterized in that** the production plant control device (10) is provided with a receiving device by which workpiece-specific data sent by the construction containers (5) are readable.

6. Production plant according to one of the preceding claims, **characterized in that** the production plant control device (10) controls the self-propelled means of transport (15) for transporting the construction containers (5) depending on the workpiece data.

7. Production plant according to one of the preceding claims, **characterized in that** it comprises a plurality of self-propelled means of transport (15), wherein at least a part of these means of transport (15) is provided with receiving or storage devices or coupling devices for unpacked components.

8. Production plant according to one of the preceding claims, **characterized in that** the construction devices of the production plant (1) are formed without separate input and display devices.

9. Production plant according to one of the preceding claims, **characterized in that** the production plant control device (10) is provided with an availability check device for the devices contained in the production plant (1) and the self-propelled means of transport (15) the attached to them construction containers (5) or components (2) are automatically controlled by the production plant control device (10) depending on an availability check of the devices present in the production plant (1).

10. Production plant according to any one of the preceding claims, **characterized in that** the production plant control device (10) monitors the level of dosing and / or storage containers (30) of building material (2) in the construction devices and is designed for the delivery of a refill control signal for the connected to the devices or with the means of transport (15) to these movable refill devices.

11. Production plant according to one of the preceding claims, **characterized in that** the production plant control device (10) is connected to a construction plate handling and adjustment device by which construction plates (40) can be placed and attached fully automatically on height-adjustable beams (41) of construction containers (5) and can be adjusted into a target position.

12. Production plant according to one of the preceding claims, **characterized in that** the adjustment data are stored in the production plant control device (10).

13. Production plant according to one of the preceding claims, **characterized in that** the data of different construction plates (40) production plant control device (10) can be stored.

14. Production plant according to one of the preceding claims, **characterized in that** in the production plant control device (10) thermal data concerning the melting process in each SLM plant can be stored and represented.

15. Production plant according to one of the preceding claims, **characterized in that** the means of transport (15) of the production plant (1) are controllable by a hall GPS system.

16. Production plant according to one of the preceding claims, **characterized in that** in the production plant integrated or used powder extraction devices are connected to the production plant control device and are monitored by this for proper inertization and / or flooding, wherein the powder extraction devices can be brought from the means of transport (15) to the construction devices (4) and can be applied to them for the extraction process.

## Revendications

1. Installation de production (1) pour la production simultanée et générative de plusieurs composants (2) au moyen de procédés sélectifs de frittage ou de fusion au laser, dans laquelle au moins une zone d'usinage de production (3) est prévue
- au moins deux dispositifs de construction sous forme de dispositifs SLM et/ou SLS (4) comportant chacun au moins un conteneur de construction (5) amovible d'une chambre de traitement des dispositifs,
- au moins une station de prélèvement (6) pour extraire un élément fini (2) de l'un des conteneurs de chantier (5),
- au moins une station de post-traitement (7) pour le post-traitement thermique et/ou mécanique superficiel des composants retirés finis (2) et
- au moins une zone de stockage (8) pour le stockage des composants (2),
- moyens de transport autopropulsés et orientables et contrôlables par un dispositif de commande de l'installation de production (10) (15), et
- un dispositif de commande d'installation de production (10) auquel sont raccordés les dispositifs de construction, la station de prélèvement (6) et les stations de post-traitement (7), et qui est conçu pour commander les dispositifs ou les stations, ainsi que pour vérifier l'état de fonctionnement et la disponibilité dans le temps des dispositifs ou des stations, et pour vérifier les quantités et le type de matériaux de construction disponibles dans les dispositifs de construction,
- soit les conteneurs de construction (5) et/ou les éléments finis qui en sont extraits (2), soit les panneaux de construction à placer dans les conteneurs de construction (40) sont automatiquement amovibles par le dispositif de commande de l'installation de production (10) des moyens de transport orientables et contrôlables (15), peuvent être transportés vers un dispositif ou une station, peuvent y être utilisés dans une chambre de traitement et peuvent être verrouillés automatiquement ou peuvent être utilisés dans une station de post-traitement (7), ou
- après l'achèvement d'un processus de construction génératif par un moyen de transport autopropulsé (15), les conteneurs de construction (5) ou les composants (2) sont automatiquement amovibles avec déverrouillage automatique et peuvent être déplacés par programme vers une station de stockage intermédiaire ou une station de prélèvement (6) et peuvent y être utilisés,
où les moyens de transport (15) sont conçus soit comme chariots de transport (15a), soit comme engins de transport aérien (15b).

2. Installation de production selon la revendication 1, dans laquelle les conteneurs de construction (5) ou les composants (2) ou les panneaux de construction (40) sont fixés au moyen d'au moins un dispositif de couplage (20) sur ou sur les moyens de transport (15) et peuvent être interposés avec des éléments de verrouillage d'un dispositif SLM ou SLS (4), d'une station de post-traitement (7) ou d'un support mobile en hauteur (41 ) d'un conteneur de construction (5), et le dispositif de couplage (20) entre le moyen de transport (15) et le conteneur de construction (5), le composant (2) ou le panneau de construction (40) peut être résolu par programme.

3. Installation de production selon la revendication 1 ou 2, **caractérisée en ce que** le dispositif de commande de l'installation de production (10) comporte un dispositif d'entrée (25) et/ou un affichage (26), dans lequel le dispositif d'entrée (25) permet d'entrer des données de commande pour l'ensemble des dispositifs de construction, des stations de prélèvement (6), des stations de post-traitement (7) présents dans l'installation de production (1) et où l'affichage (26) permet d'afficher à la fois des données spécifiques à l'installation de production de l'ensemble de l'installation de production (1 ) et de ses composants individuels.

4. Installation de production selon l'une quelconque des revendications précédentes, **caractérisée en ce que** tout moyen de transport autopropulsé (15) comporte un codage électronique lisible par les dispositifs de construction, la station de prélèvement (6), la station de post-traitement (7) et/ou le dispositif de commande de l'installation de production (10).

5. Installation de production selon l'une quelconque des revendications précédentes, **caractérisée en ce que** le dispositif de commande de l'installation de production (10) est équipé d'un dispositif de réception permettant de lire les données spécifiques aux pièces envoyées par les conteneurs de construction (5).

6. Installation de production selon l'une des revendications précédentes, **caractérisée en ce que** l'installation de commande de l'installation de production (10) commande les moyens de transport autopropulsés (15) pour le transport des conteneurs de construction (5) en fonction des données de la pièce à usiner.

7. Installation de production selon l'une quelconque des revendications précédentes, **caractérisée en ce qu'**elle comprend une pluralité de moyens de transport autopropulsés (15), dont au moins une partie (15) est équipée de dispositifs de réception, de stockage ou de couplage de composants décompressés.

8. Installation de production selon l'une quelconque des revendications précédentes, **caractérisée en ce que** les dispositifs de construction de l'installation de production (1) sont conçus sans dispositifs d'entrée et d'affichage séparés.

9. Installation de production selon l'une quelconque des revendications précédentes, **caractérisée en ce que** le dispositif de commande de l'installation de production (10) est équipé d'un dispositif de vérification de la disponibilité des dispositifs contenus dans l'installation de production (1) et que les moyens de transport autopropulsés (15) les conteneurs de construction (5) ou les composants (2) qui y sont attachés sont automatiquement commandés par le dispositif de commande de l'installation de production (10), en fonction d'un contrôle de la disponibilité des dispositifs présents dans l'installation de production (1).

10. Installation de production selon l'une quelconque des revendications précédentes, **caractérisée en ce que** le dispositif de commande de l'installation de production (10) surveille le niveau des réservoirs de dosage et/ou de stockage (30) de matériaux de construction (2) dans les installations de construction et est conçu pour délivrer un signal de commande de recharge pour les dispositifs connectés aux dispositifs ou aux moyens de transport (15) vers ces dispositifs de recharge mobiles.

11. Installation de production selon l'une quelconque des revendications précédentes, **caractérisée en ce que** le dispositif de commande de l'installation de production (10) est relié à un dispositif de manipulation et d'ajustement des plaques de construction, grâce auquel les plaques de construction (40) peuvent être placées et fixées de manière entièrement automatique sur des supports réglables en hauteur (41) de conteneurs de construction (5) et peuvent être ajustées dans une position de consigne.

12. Installation de production selon l'une quelconque des revendications précédentes, **caractérisée en ce que** les données de réglage sont enregistrées dans le dispositif de commande de l'installation de production (10).

13. Installation de production selon l'une quelconque des revendications précédentes, **caractérisée en ce que** les données de différents panneaux de construction (40) installation de commande d'installation de production (10) sont mémorisables.

14. Installation de production selon l'une quelconque des revendications précédentes, **caractérisée en ce que**, dans l'installation de commande de l'installation de production (10), les données thermiques relatives au processus de fusion peuvent être enregistrées et représentées dans chaque installation SLM.

15. Installation de production selon l'une quelconque des revendications précédentes, **caractérisée en ce que** les moyens de transport (15) de l'installation de production (1) sont contrôlables par un système GPS de hall.

16. Installation de production selon l'une quelconque des revendications précédentes, **caractérisée en ce que** des dispositifs d'aspiration des poudres intégrés ou utilisés dans l'installation de production sont raccordés à l'installation de commande de l'installation de production et surveillés par celle-ci pour une inertisation et/ou une inondation correctes, étant entendu que les dispositifs d'aspiration des poudres peuvent être transportés des moyens de transport (15) vers les dispositifs de construction (4) et peuvent y être aspirés.
